# EUROPÄISCHE PATENTSCHRIFT

(11) **EP 3 631 922 B1**
(45) Veröffentlichungstag und Bekanntmachung des Hinweises auf die Patenterteilung: **03.05.2023**
(21) Anmeldenummer: 18729888.0
(22) Anmeldetag: 23.05.2018
(51) Int. Cl.: H02B 1/056, H01R 9/26, H02B 1/20, H02B 1/32

(54) **STROMVERTEILER**
CURRENT DISTRIBUTOR
TABLEAU DE DISTRIBUTION

(30) Priorität: 23.05.2017 DE 102017111245
(43) Veröffentlichungstag der Anmeldung: 08.04.2020
(73) Patentinhaber: Militello, Carmelo, 64521 Groß-Gerau (DE)
(72) Erfinder: Militello, Carmelo, 64521 Groß-Gerau (DE)
(74) Vertreter: Habermann Intellectual Property Partnerschaft von Patentanwälten mbB
(86) Internationale Anmeldenummer: PCT/EP2018/063517
(87) Internationale Veröffentlichungsnummer: WO 2018/215547

(56) Entgegenhaltungen:
- WO-A2-2011/054743
- DE-A1- 19 539 420
- DE-A1- 19 918 212
- DE-A1-102013 109 247
- DE-B- 1 028 195
- DE-U- 1 874 063

## Beschreibung

Die Erfindung betrifft einen Stromverteiler für die Hausinstallation oder die Industrie mit einem Gehäuse und einer innerhalb des Gehäuses angeordneten Montageplatte zur Montage elektrischer Funktionsbauelemente, wobei die Montageplatte eine Vorderseite zur Anordnung der elektrischen Funktionsbauelemente und eine einer Gehäuserückwand zugewandten und der Vorderseite gegenüberliegenden Rückseite aufweist, wobei die Montageplatte ausgehend von der Vorderseite mehrere in Richtung der Rückseite verlaufende Kontaktierungsausnehmungen aufweist, wobei im Bereich der Kontaktierungsausnehmungen elektrische Kontaktierungselemente zur Kontaktierung elektrischer Funktionsbauelemente angeordnet sind, wobei einzelne Kontaktierungselemente über elektrische Verbindungsleiter elektrisch leitend miteinander verbunden sind und wobei die Verbindungsleiter zwischen der Rückseite der Montageplatte und der Gehäuserückwand angeordnet sind, und wobei die Verbindungsleiter jeweils ein Draht oder ein Kabel sind und die Kontaktierungselemente jeweils ein Endabschnitt eines Verbindungsleiters sind, wobei der Endabschnitt von der Rückseite der Montageplatte durch die zugeordnete Kontaktierungsausnehmung geführt ist und von der Vorderseite der Montageplatte absteht.

Ein herkömmlicher Stromverteiler, der auch als elektrischer Verteiler bezeichnet werden kann, kann beispielsweise ein Schaltschrank sein. Solche Schaltschränke sind aus dem Stand der Technik bekannt und werden zu unterschiedlichen Verwendungszwecken eingesetzt. Beispielsweise dienen Schaltschränke bei der Hausinstallation zur Anordnung und Verdrahtung der elektrischen Funktionsbauelemente, insbesondere von Reiheneinbaugeräten, wie beispielsweise Fehlerstromschutzschalter, Sicherungsautomaten und Stromstoßschalter. Zu diesem Zweck werden in dem Schaltschrank üblicherweise Hutschienen montiert und die benötigten elektrischen Funktionsbauelemente auf diesen Hutschienen klemmend angeordnet, wobei die hierzu verwendeten elektrischen Funktionsbauelemente üblicherweise in Reihenbauweise ausgeführt sind.

Zudem werden elektrische Zuleitungen, bei Verwendung des Schaltschranks in der Hausinstallation insbesondere eine Drehstromleitung, sowie elektrische Abgangsleitungen, die beispielsweise elektrisch leitend mit Steckdosen der Hausinstallation verbunden sind, in den Schaltschrank geführt. Anschließend erfolgt die Verdrahtung der auf den Hutschienen angeordneten elektrischen Funktionsbauelemente untereinander sowie mit der elektrischen Zuführleitung sowie den elektrischen Abgangsleitungen. Zur Verdrahtung weisen die aus dem Stand der Technik bekannten elektrischen Funktionsbauelemente üblicherweise Schraubklemmkontakte oder Steckklemmkontakte auf, in denen Adern elektrischer Verbindungsleiter klemmend festgelegt werden können.

Insbesondere die üblicherweise vor Ort durchzuführende Verdrahtung der elektrischen Funktionsbauelemente ist besonders aufwendig, sodass hierfür eine erhebliche Montagezeit benötigt wird.

Um die Montage zu erleichtern ist es beispielsweise aus DE 195 39 420 A1, aus DE 18 74 063 U oder aus DE 10 28 195 B bekannt, dass eine Montageplatte in einem solchen Schaltschrank mehrere Löcher aufweist, sodass ein Teil der Verdrahtung der elektrischen Funktionsbauelemente von der Vorderseite, auf welcher die Funktionselemente angeordnet sind, zur Rückseite hindurchgeführt und dort verlegt werden kann. Dadurch wird die Vorderseite übersichtlicher und einzelne Funktionskomponenten bzw. deren Anschlüsse sind einfacher zugänglich.

Aus DE 10 2013 109 247 A1 ist ein Schaltschrank mit einer Montageplatte bekannt, die zahlreiche Löcher aufweist, in welche die Funktionselemente von der Vorderseite aus eingesteckt werden und dadurch auf der Montageplatte festgelegt werden können. Die Verdrahtung der einzelnen Funktionselemente kann dann über die Rückseite der Montageplatte erfolgen.

Als Aufgabe der Erfindung wird es angesehen, die aus dem Stand der Technik bekannten Stromverteiler so weiterzuentwickeln, dass eine möglichst einfache Montage der benötigten elektrischen Funktionsbauelemente ermöglicht wird.

Diese Aufgabe wird erfindungsgemäß dadurch gelöst, dass mehrere nebeneinander angeordnete Endabschnitte mehrerer Verbindungsleiter mit einer formstabilen Verbindungseinrichtung miteinander verbunden sind und durch eine Verlagerung der Verbindungseinrichtung gemeinsam verlagert werden können. Die formstabile Verbindungseinrichtung kann beispielsweise ein Stab oder ein Streifen aus Kunststoff sein, an welchem Ausnehmungen oder Bohrungen ausgebildet sind, in welchen die einzelnen Endabschnitte der Verbindungsleiter aufgenommen und gehalten sind. Bevor einzelne elektrische Funktionsbauelemente auf der Montageplatte festgelegt und mit den zugeordneten Endabschnitten der Verbindungsleiter verbunden werden können alle nebeneinander angeordneten Endabschnitte, beispielsweise die in einer Reihe angeordneten Endabschnitte mit der formstabilen Verbindungseinrichtung nach außen verbogen werden, um Platz für eine schnelle und nicht durch Endabschnitte behinderte Montage der betreffenden elektrischen Funktionsbauelemente zu schaffen. Die einem einzelnen elektrischen Funktionsbauelement zugeordneten Endabschnitte können dann von der formstabilen Verbindungseinrichtung gelöst und mit den jeweiligen Anschlüssen des elektrischen Funktionsbauelements verbunden werden. Es ist ebenfalls möglich, die formstabile Verbindungseinrichtung mit Sollbruchstellen zu versehen, sodass einzelne Abschnitte der formstabilen Verbindungseinrichtung für die Montage und elektrische Kontaktierung einzelner elektrischer Funktionsbauelemente abgetrennt werden können.

Auf diese Weise können zunächst die erforderlichen Verbindungsleiter auf der Rückseite der Montageplatte angeordnet und mit den jeweiligen Kontaktierungselementen elektrisch leitend verbunden werden. Anschließend können die benötigten elektrischen Funktionsbauelemente einfach auf der Vorderseite an der Montageplatte angeordnet und mit den jeweiligen Kontaktierungselementen verbunden werden. Auf diese Weise ist es erfindungsgemäß auch möglich, vorkonfektionierte und an unterschiedliche Einsatzzwecke angepasste Montageplatten bereitzustellen, bei denen die üblicherweise benötigten elektrischen Verbindungen zwischen einzelnen Kontaktierungselementen bereits mit entsprechenden Verbindungsleitern hergestellt sind. Auf diese Weise kann ein entsprechend vorkonfektionierter Schaltschrank, der beispielsweise für einen Einsatz als Unterputzverteilung oder Aufputzverteilung in einer Hausinstallation vorgesehen ist, installiert werden und anschließend die in der konkreten Installationssituation benötigten elektrischen Funktionsbauelemente an der Vorderseite der Montageplatte angeordnet und mit den Kontaktierungselementen elektrisch leitend verbunden werden.

Die Verbindungsleiter sind jeweils ein Draht oder ein Kabel und die Kontaktierungselemente jeweils ein Endabschnitt eines Verbindungsleiters, wobei der Endabschnitt von der Rückseite der Montageplatte durch die zugeordnete Kontaktierungsausnehmung geführt ist und von der Vorderseite der Montageplatte absteht. Die Verbindungsleiter können für alle auf der Montageplatte befestigbaren elektrischen Funktionsbauelemente bereits vormontiert sein. Für eine individuelle Anpassung an die jeweilige Installationssituation müssen lediglich die tatsächlich benötigten elektrischen Funktionsbauelemente auf der Montageplatte montiert und mit den zugeordneten Verbindungsleitern kontaktiert bzw. verbunden werden.

Dabei können in vorteilhafter Weise die handelsüblichen und standardisierten elektrischen Funktionsbauelemente verwendet und auf einer hierfür vorgesehenen Hutschiene befestigt werden, die auf der Montageplatte angeordnet ist. Die von der Rückseite nach vorne ragenden Endabschnitte der Verbindungsleiter können dann in bekannter Weise mit den hierfür vorgesehenen Anschlüssen der handelsüblichen elektrischen Funktionsbauelementen verbunden werden.

In vorteilhafter Weise ist optional vorgesehen, dass die Montageplatte eine Formgebung bzw. Abmessungen und eine Umfangskontur aufweist, die für den Einsatz in möglichst vielen verschiedenen Gehäuses geeignet ist. Die vorkonfigurierte und mit Verbindungsleitern bestückte Montageplatte kann dann in viele verschiedene Gehäuse für beispielsweise Stromverteiler, Schaltschränke oder Zählerkasten eingesetzt werden. Auch ein nachträglicher Austausch der Montageplatte eines bereits bestehenden Stromverteilers mit einer vorkonfektionierten Montageplatte ist in einfacher Weise möglich.

Die Endabschnitte der Verbindungsleiter können bereits abisoliert sein und eine elektrisch leitende Kontaktfläche bzw. ein elektrisch leitendes Verbindungsleiterende aufweisen, sodass keine weitere Montagezeit für das Abisolieren während der individuellen Montage und Anpassung einer vorkonfektionierten Montageplatte an die konkrete Installationssituation vor Ort erforderlich ist. Gemäß einer vorteilhaften Ausgestaltung des Erfindungsgedankens ist optional vorgesehen, dass auf dem Endabschnitt eine abnehmbare Schutzkappe angeordnet ist, die eine elektrische Kontaktierung des Endabschnitts verhindert. Die Schutzkappe bildet auch einen mechanischen Schutz bei biegesteifen Drähten und Kabeln, die gegebenenfalls scharfkantige Enden aufweisen können.

Zur Herstellung der elektrischen Verbindungen zwischen den Kontaktierungselementen bzw. zur Herstellung der elektrischen Verbindungsleiter ist vorgesehen, dass die Verbindungsleiter auf die Rückseite der Montageplatte aufgebracht sind.

Vorteilhafterweise ist erfindungsgemäß vorgesehen, dass die Vorderseite der Montageplatte elektrisch nicht-leitend ausgestaltet ist. Erfindungsgemäß werden zur Montage der elektrischen Funktionsbauelemente Hutschienen an der Vorderseite angebracht.

Um den erfindungsgemäßen Stromverteiler mit vorkonfektionierter Montageplatte unter anderem als Unterverteilung einer Hausinstallation einsetzen zu können, ist erfindungsgemäß vorgesehen, dass die Kontaktierungselemente mindestens drei Kontaktierungsabschnitten zugeordnet sind, wobei jeder Kontaktierungsabschnitt zur Kontaktierung mit Funktionsbauelementen vorgegebener Bauelementeklassen vorgesehen ist und wobei die Kontaktierungselemente der Kontaktierungsabschnitte entsprechend der zugeordneten Bauelementeklassen mit Kontaktierungselementen anderer Kontaktierungsabschnitte elektrisch leitend verbunden sind. Bei den verschiedenen Einsatzzwecken von Schaltschränken, wie beispielsweise für eine Unterverteilung, ist üblicherweise bekannt, welche Funktionsbauelemente vorgegebener Bauelementeklassen bzw. Funktionsbauelementetypen für die Installation erforderlich sind. Die üblicherweise erforderlichen elektrischen Verbindungsleiter zur elektrischen Verbindung der Funktionsbauelemente unterschiedlicher Funktionsbauelementetypen bzw. Bauelementeklassen sind ebenfalls bekannt. Daher können die erforderlichen elektrischen Verbindungsleiter zwischen den Kontaktierungselementen unterschiedlicher Kontaktierungsabschnitte einfach vorkonfektioniert werden, sodass bei der abschließenden Montage lediglich noch die an die jeweilige Anwendung angepassten Funktionsbauelemente der verschiedenen Bauelementeklassen ausgewählt und an der Vorderseite der Montageplatte angeordnet werden müssen.

Bei einer besonders vorteilhaften Ausgestaltung des erfindungsgemäßen Schaltschranks ist vorgesehen, dass ein FI-Kontaktierungsabschnitt zwei parallel zueinander ausgerichtete FI-Kontaktierungsreihen mit jeweils vier FI-Kontaktierungselementen aufweist, wobei FI-Außenleiterkontaktierungselemente und FI-Neutralleiterkontaktierungselemente einer ersten FI-Kontaktierungsreihe über Verbindungsleiter mit auf der Vorderseite der Montageplatte angeordneten elektrischen Außenleiteranschlussklemme und einer Neutralleiteranschlussklemme verbunden sind. Auf diese Weise kann die erforderliche elektrische Zuleitung bzw. die einzelnen Leiter der elektrischen Zuleitung bei der Montage in den Schaltschrank eingeführt und auf der Vorderseite mit den Außenleiteranschlussklemmen und der Neutralleiteranschlussklemme verbunden werden. Mit den Kontaktierungselementen des FI-Kontaktierungsabschnitts kann dann einfach ein geeigneter Fehlerstromschutzschalter beispielsweise klemmend verbunden werden. Dabei ist eine Verdrahtung beispielsweise üblicherweise verwendeter Stromleitungsschienen mit dem Fehlerstromschutzschalter nicht erforderlich, sodass der Montageaufwand vor Ort erheblich verringert wird.

Vorteilhafterweise ist erfindungsgemäß vorgesehen, dass mindestens ein SI-Kontaktierungsabschnitt zwei parallel zueinander ausgerichtete SI-Kontaktierungsreihen mit jeweils mindestens zwei SI-Kontaktierungselementen aufweist, wobei jeweils ein FI-Außenleiterkontaktierungselement einer zweiten FI-Kontaktierungsreihe über einen Verbindungsleiter mit einem SI-Kontaktierungselement einer ersten SI-Kontaktierungsreihe elektrisch leitend verbunden ist. Jeweils zwei einem daran festlegbaren Sicherungsautomaten zugeordneten SI-Kontaktierungselemente, die auf einander gegenüberliegenden SI-Kontaktierungsreihen angeordnet sind, dienen als Eingang und als Ausgang für den Sicherungsautomaten. Auf diese Weise können mit den SI-Kontaktierungselementen des SI-Kontaktierungsabschnitts einfach entsprechende Sicherungsautomaten beispielsweise über eine klemmende Montage verbunden werden, wobei keine zusätzliche aufwendige Verdrahtung der Sicherungsautomaten mit dem Fehlerstromschutzschalter erforderlich ist.

Im Hinblick auf eine möglichst raumsparende Anordnung der Verbindungsleiter und der elektrischen Funktionsbauelemente auf der Montageplatte ist gemäß einer optionalen Ausgestaltung des Erfindungsgedankens vorgesehen, dass mehrere Reihenklemmen auf der Montageplatte festgelegt sind, wobei jede Reihenklemme von der Vorderseite der Montageplatte aus zugängliche Kontaktierungsanschlüsse aufweist und elektrisch leitend mit einem auf der Rückseite der Montageplatte angeordneten Verbindungsleiter verbunden ist. Während handelsübliche Reihenklemmen ebenso wie die handelsüblichen und standardisierten elektrischen Funktionsbauelemente auf einer Hutschiene befestigt und von der Vorderseite aus oder von einer Seitenfläche aus zugängliche Anschlüsse aufweist, lässt sich durch die Verwendung einer erfindungsgemäß ausgestalteten Reihenklemme erheblich Platz einsparen, da jede Reihenklemme bereits einen zur Rückseite der Montageplatte hin geführten elektrisch leitenden Anschluss zur Verbindung mit einem zugeordneten Verbindungsleiter aufweist. Dieser Anschluss zur Verbindung mit einem zugeordneten Verbindungsleiter ist raumsparend an einer im montierten Zustand der Montageplatte zugewandten Unterseite der Reihenklemme angeordnet und muss nicht mehr von außen zugänglich an einer Oberseite oder an einer Seitenfläche der Reihenklemme angeordnet sein.

Bei einer besonders vorteilhaften Ausgestaltung des erfindungsgemäßen Schaltschranks ist vorgesehen, dass mindestens ein Klemmenkontaktierungsabschnitt drei parallel zueinander ausgerichtete Klemmenkontaktierungsreihen mit jeweils mindestens zwei Klemmenkontaktierungselementen aufweist, wobei jeweils ein SI-Kontaktierungselement einer zweiten SI-Kontaktierungsreihe über einen Verbindungsleiter mit einem Klemmenkontaktierungselement einer ersten Klemmenkontaktierungsreihe elektrisch leitend verbunden ist. Mit den Klemmenkontaktierungselementen des Klemmenkontaktierungsabschnitts können einfach beispielsweise geeignete Reihenklemmen vorteilhafterweise klemmend an der Vorderseite festgelegt und mit entsprechenden Verbindungsstiften elektrisch leitend mit den Klemmenkontaktierungselementen verbunden werden. Mit den Reihenklemmen können dann einfach die ebenfalls in den Schaltschrank eingeführten elektrischen Abgangsleitungen bzw. elektrischen Abgangsleiter, die beispielsweise zu Steckdosen der Hausinstallation führen, elektrisch leitend vorteilhafterweise über Schraubklemm- oder Steckklemmkontakte verbunden werden. Ein weiterer Vorteil dieser Ausgestaltung ist es, dass die ansonsten notwendige Hutschiene für die Reihenklemmen eingespart werden kann.

Zur Herstellung der erforderlichen Kontaktierung beispielsweise mit dem Klemmenkontaktierungsabschnitt verbundener Reihenklemmen und dem Neutralleiter der Zuleitung über den in dem FI-Kontaktierungsabschnitt angeordneten Fehlerstromschutzschalter ist erfindungsgemäß vorgesehen, dass Klemmenkontaktierungselemente einer zweiten Klemmenkontaktierungsreihe über mindestens einen Verbindungsleiter elektrisch leitend mit einem FI-Neutralleiterkontaktierungselement der zweiten FI-Kontaktierungsreihe verbunden sind.

Um die in dem Klemmenkontaktierungsabschnitt mit den Klemmenkontaktierungselementen verbundenen Reihenklemmen auch mit einem Schutzleiter verbinden zu können ist, erfindungsgemäß vorgesehen, dass Klemmenkontaktierungselemente einer dritten Klemmenkontaktierungsreihe über mindestens einen Verbindungsleiter elektrisch leitend mit einer auf der Vorderseite der Montageplatte angeordneten Schutzleiteranschlussklemme verbunden sind.

Vorteilhafterweise ist erfindungsgemäß vorgesehen, dass der Schaltschrank einen mit dem FI-Kontaktierungsabschnitt elektrisch leitend verbindbaren Fehlerstromautomaten aufweist.

Bei einer besonders vorteilhaften Ausgestaltung des erfindungsgemäßen Schaltschranks ist vorgesehen, dass jeweils ein SI-Kontaktierungselement der ersten SI-Kontaktierungsreihe und ein SI-Kontaktierungselement der zweiten SI-Kontaktierungsreihe ein SI-Kontaktierungselementepaar bildet und dass der Schaltschrank mindestens ein mit einem SI-Kontaktierungspaar verbindbaren Sicherungsautomaten aufweist. Jedes SI-Kontaktierungselementepaar dient als Eingang und Ausgang für einen damit verbundenen Sicherungsautomaten.

Erfindungsgemäß ist vorteilhafterweise vorgesehen, dass jeweils ein Klemmenkontaktierungselement der ersten Klemmenkontaktierungsreihe und ein Klemmenkontaktierungselement der zweiten Klemmenkontaktierungsreihe und ein Klemmenkontaktierungselement der dritten Klemmenkontaktierungsreihe eine Klemmenkontaktierungselementeeinheit bildet und dass der Schaltschrank mindestens eine mit einer Klemmenkontaktierungselementeeinheit verbindbare Reihenklemme aufweist. Weitere vorteilhafte Ausgestaltungen werden anhand von in der Zeichnung dargestellten Ausführungsbeispielen näher erläutert.

Es zeigt:
Figur 1 eine schematisch dargestellte Vorderansicht einer Montageplatte mit auf Hutschienen angeordneten elektrischen Funktionsbauelementen,
Figur 2 eine schematisch dargestellte Rückansicht der in Figur 1 gezeigten Montageplatte, wobei die Verbindungsleiter als Kabel ausgestaltet und auf der Rückseite der Montageplatte vorkonfektioniert sind,
Figur 3 eine schematisch dargestellte Seitenansicht der in den Figuren 1 und 2 gezeigten Montageplatte mit den darauf angeordneten elektrischen Funktionsbauelementen,
Figur 4 eine schematisch dargestellte Vorderansicht eines Teilbereichs der in den Figuren 1 bis 3 gezeigten, zur Verdeutlichung nicht vollständig mit elektrischen Funktionsbauelementen bestückten Montageplatte, wobei Endabschnitte der Verbindungsleiter auf die Vorderseite der Montageplatte ragen,
Figur 5 eine schematisch dargestellte Vorderansicht des in Figur 4 gezeigten Teilbereichs der Montageplatte, wobei die nicht mit elektrischen Funktionsbauelementen verbundenen Endabschnitte der Verbindungsleiter jeweils mit einer abnehmbaren Schutzkappe bedeckt sind,
Figur 6 eine schematisch dargestellte Rückansicht des in den Figuren 4 und 5 gezeigten Teilbereichs der Montageplatte mit zusätzlichen Aussparungen zum Festlegen der in Figur 5 gezeigten Schutzkappen der Endabschnitte der Verbindungsleiter, und
Figur 7 eine schematisch dargestellte Rückansicht eines Teilbereichs der Montageplatte mit erfindungsgemäß ausgestalteten Reihenklemmen.

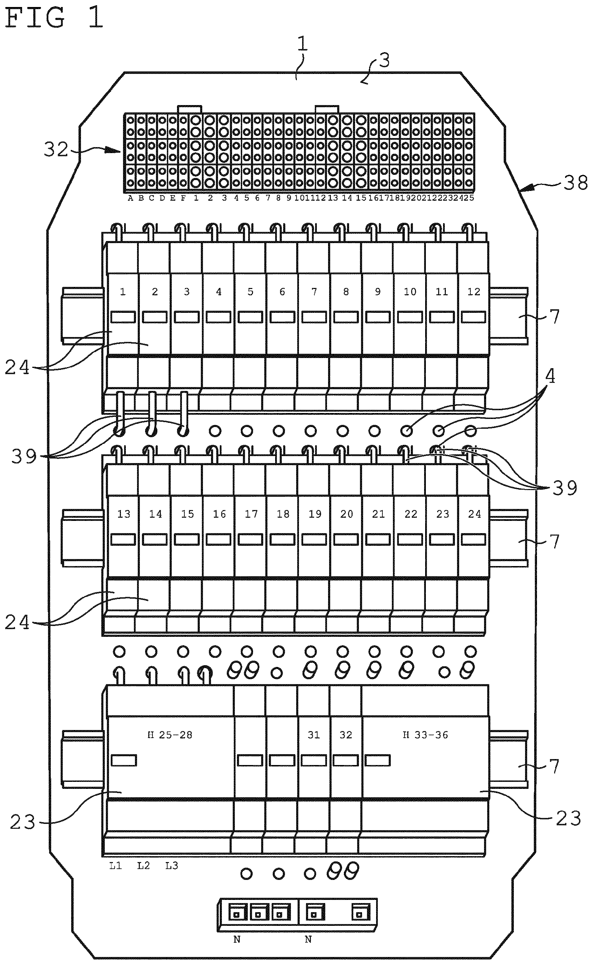

In den Figuren 1 bis 7 ist exemplarisch eine Montageplatte 1 in verschiedenen Ansichten dargestellt. Eine Umfangskontur 38 der Montageplatte 1 ist derart vorgegeben, dass die Montageplatte 1 in viele handelsübliche Gehäuse beispielsweise eines Stromverteilers oder eines Schaltschranks oder eines elektrischen Verbindungskastens eingesetzt werden kann. In Figur 1 ist eine Vorderansicht eines vollständig mit insgesamt 28 Sicherungsautomaten 24 und zwei Fehlerstromautomaten 23 bestückten Montageplatte 1 dargestellt, wobei die Sicherungsautomaten 24 und die Fehlerstromautomaten 23 noch nicht vollständig angeschlossen dargestellt sind. Bei den Sicherungsautomaten 24 und den Fehlerstromautomaten 23 handelt es sich um handelsübliche Automaten, die jeweils in üblicher Weise auf der zugeordneten Hutschiene 7 angeordnet und festgelegt sind. Die Sicherungsautomaten 24 und die Fehlerstromautomaten 23 können für die individuelle Konfiguration und Installationssituation vor Ort mit Endabschnitten 39 der auf einer Rückseite 33 vorkonfigurierten und verlegten Verbindungsleiter 2 verbunden werden, die durch Kontaktierungsausnehmungen 4 auf eine Vorderseite 3 der Montageplatte 1 geführt sind und von der Vorderseite 3 der Montageplatte 1 abstehen.

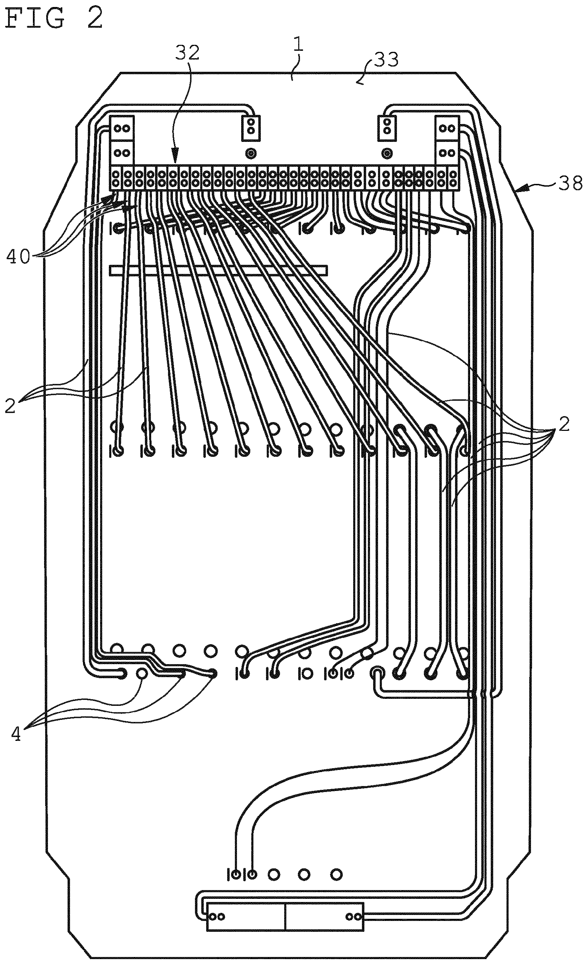

In Figur 2 ist die Rückseite 33 der in Figur 1 gezeigten Montageplatte 1 mit einer nicht vollständig gezeigten Verdrahtung der einzelnen Kontaktierungsausnehmungen 4 mit Verbindungsleitern 2, die jeweils als isolierter Draht bzw. als isoliertes Kabel ausgebildet sind. Die Endabschnitte 39 der Verbindungsleiter 2 sind je nach Anordnung und Zuordnung des betreffenden Verbindungsleiters 2 entweder auf der Rückseite 33 der Montageplatte 1 mit einer zugeordneten Reihenklemme 32 verbunden oder aber die Endabschnitte 39 der Verbindungsleiter 2 sind durch die jeweilige Kontaktierungsausnehmung 4 zur Vorderseite 3 der Montageplatte 1 hindurchgeführt und ragen von der Vorderseite 3 abstehend aus den Kontaktierungsausnehmungen 4 heraus. Die aus den Kontaktierungsausnehmungen 4 herausragenden Endabschnitte 39 der Verbindungsleiter 2 können je nach individueller Konfiguration und Bestückung der Montageplatte 1 vor Ort in einfacher und bekannter Weise mit dem jeweiligen Sicherungsautomaten 24 oder mit einem Fehlerstromautomaten 23 verbunden werden. Im Hinblick auf eine möglichst platzsparende Anordnung und elektrisch leitende Verbindung der Reihenklemmen 32 weisen die Reihenklemmen 32 jeweils einen zu der Rückseite 33 der Montageplatte 1 hindurchgeführten elektrisch leitenden Anschluss 40 auf. Die Reihenklemmen 32 werden unmittelbar auf der Vorderseite 3 der Montageplatte 1 festgelegt, ohne dass eine separate Hutschiene 7 erforderlich wird. Bei den Sicherungsautomaten 24 und den Fehlerstromautomaten 23 kann es sich um handelsübliche und standardisierte Automaten handeln, die in bekannter Weise auf der jeweiligen Hutschiene 7 befestigt und mit den von der Rückseite 33 zur Vorderseite 3 der Montageplatte 1 herausragenden Endabschnitten 39 der vorkonfigurierten und auf der Rückseite 33 vormontierten Verbindungsleiter 2 verbunden werden können.

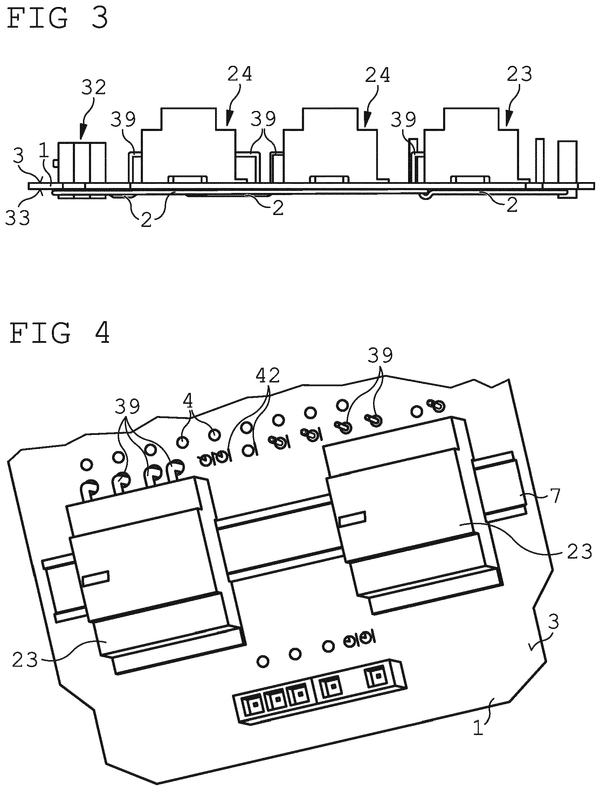

In Figur 3 ist zur Veranschaulichung eine Seitenansicht der in den Figuren 1 und 2 gezeigten Montageplatte 1 dargestellt, wobei die Vorderseite 3 vollständig mit Sicherungsautomaten 24 und Fehlerstromautomaten 23 bestückt und die Rückseite 33 vollständig mit den vormontierten Verbindungsleitern 2 bestückt ist, deren Endabschnitte 39 zur Vorderseite 3 der Montageplatte 1 hin geführt sind und teilweise bereits mit den zugeordneten Sicherungsautomaten 24 und den Fehlerstromautomaten 23 verbunden sind.

In den Figuren 4 bis 6 sind verschiedene Ansichten eines Teilbereichs der Montageplatte 1 dargestellt, in welchem die Fehlerstromautomaten 23 angeordnet sind. Der in Figur 4 links dargestellte Fehlerstromautomat 23 ist bereits elektrisch leitend mit den zugeordneten Endabschnitten 39 der betreffenden Verbindungsleiter 2 verbunden, während der in Figur 4 rechts dargestellte Fehlerstromautomat 23 noch nicht mit den senkrecht von der Vorderseite 3 abstehenden Endabschnitten 39 der zugeordneten Verbindungsleiter 2 verbunden ist.

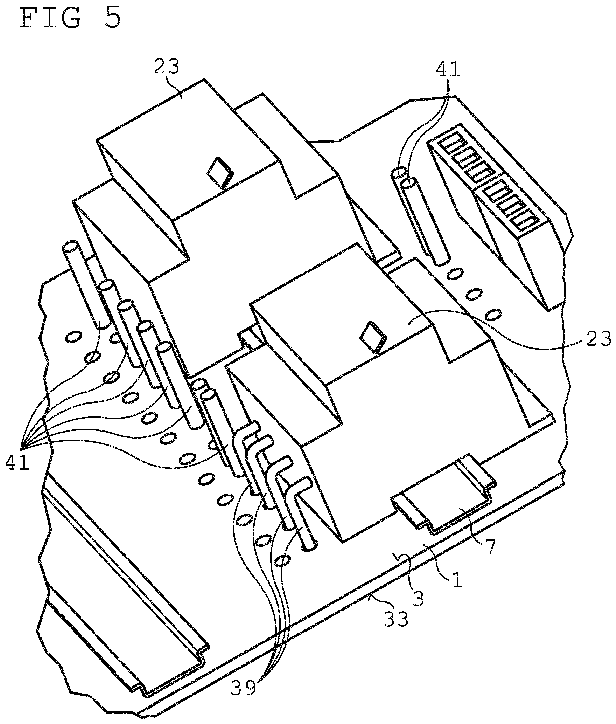

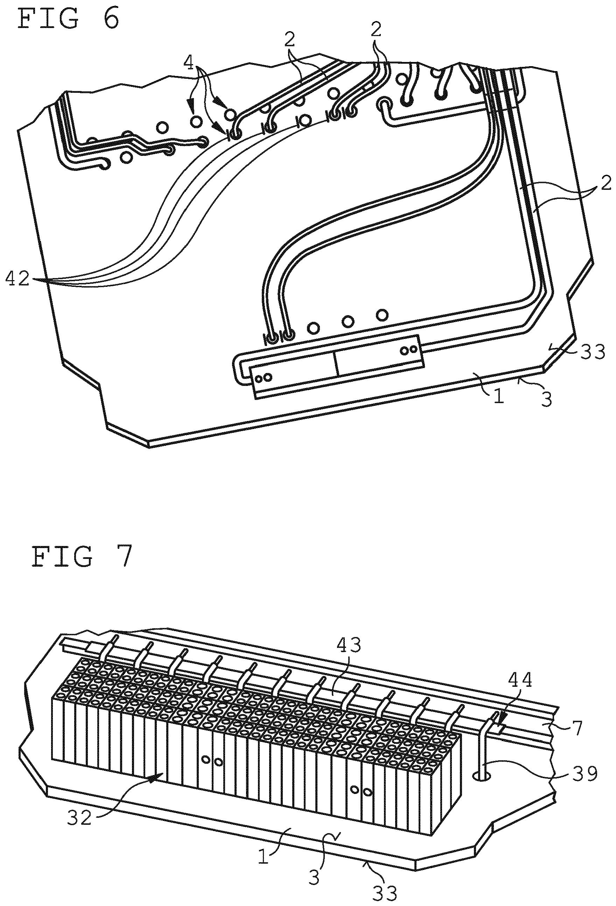

Die in Figur 4 noch nicht verbundenen Endabschnitte 39 der Verbindungsleiter 2 sind ohne zusätzliche Schutzmaßnahmen gezeigt, wie sie unmittelbar vor einer elektrischen Kontaktierung mit dem zugeordneten Sicherungsautomaten 24 oder Fehlerstromautomaten 23 benötigt werden. Dagegen sind die Endabschnitte 39 der noch nicht verbundenen Verbindungsleiter 2 bei der in Figur 5 gezeigten Darstellung jeweils mit einer abnehmbaren Schutzkappe 41 bedeckt. Die abnehmbare Schutzkappe 41 kann klemmend oder rastend in einer unmittelbar neben der betreffenden Kontaktierungsausnehmung 4 angeordneten schlitzartigen Schutzkappenausnehmung 42 festgelegt werden. Jeder Kontaktierungsausnehmung 4 kann eine Schutzkappenausnehmung 42 zugeordnet sein. Figur 6 zeigt die Rückseite 33 des in den Figuren 4 und 5 dargestellten Teilbereichs der Montageplatte 1. In den Figuren 4 bis 6 sind die Schutzkappenausnehmungen 42 nur teilweise gezeigt. Die Schutzkappen 41 können auch in der jeweiligen Kontaktierungsausnehmung 4 festgelegt sein. Bei einer vollständig vormontierten Montageplatte 1 können alle von der Vorderseite 3 der Montageplatte 1 abstehenden Endabschnitte 39 der Verbindungsleiter 2 jeweils mit einer Schutzkappe 41 bedeckt sein, die für die Bestückung und elektrische Verbindung mit den einzelnen Sicherungsautomaten 24 und Fehlerstromautomaten 23 vor Ort je nach Bedarf und Montagefortschritt abgenommen werden kann.

In Figur 7 ist erfindungsgemäß ein weiterer Teilbereich der Montageplatte 1 mit den dort angeordneten Reihenklemmen 32 dargestellt. Die Endabschnitte 39 der auf der Rückseite 33 der Montageplatte 1 verlegten und auf der Rückseite 33 mit den Reihenklemmen 32 verbundenen Verbindungsleiter 2 ragen durch die zugeordneten Kontaktierungsausnehmungen 4 zur Vorderseite 3 der Montageplatte 1. Die in einer Reihe angeordneten Endabschnitte 39 sind über einen dünnen Streifen 43 aus einem formstabilen Kunststoff miteinander verbunden. Der dünne Streifen 43 bildet eine formstabile Verbindungseinrichtung 44, mit welcher alle Endabschnitte 39 dieser Reihe gemeinsam von der benachbart angeordneten Hutschiene 7 weg gebogen oder zu der Hutschiene 7 hingebogen werden können, um die Montage von Sicherungsautomaten 24 oder Fehlerstromautomaten 23 zu erleichtern. Der dünne Streifen 43 kann bei Bedarf in einzelne Abschnitte zertrennt werden, die unabhängig voneinander verlagert werden können, um die dem betreffenden Abschnitt zugeordneten und damit verbundenen Endabschnitte 39 der Verbindungsleiter 2 gemeinsam, aber unabhängig von den nebenan angeordneten Endabschnitten 39 zur Hutschiene 7 hin oder davon weg zu biegen.

## Patentansprüche

1. Stromverteiler mit einem Gehäuse und einer innerhalb des Gehäuses angeordneten Montageplatte (1) zur Montage elektrischer Funktionsbauelemente, wobei die Montageplatte (1) eine Vorderseite (3) zur Anordnung der elektrischen Funktionsbauelemente und eine einer Gehäuserückwand zugewandten und der Vorderseite (3) gegenüberliegenden Rückseite (33) aufweist, wobei die Montageplatte (1) ausgehend von der Vorderseite (3) mehrere in Richtung der Rückseite (33) verlaufende Kontaktierungsausnehmungen (4) aufweist, wobei im Bereich der Kontaktierungsausnehmungen (4) elektrische Kontaktierungselemente zur Kontaktierung elektrischer Funktionsbauelemente angeordnet sind, wobei einzelne Kontaktierungselemente über elektrische Verbindungsleiter (2) elektrisch leitend miteinander verbunden sind, wobei die Verbindungsleiter (2) zwischen der Rückseite (33) der Montageplatte (1) und der Gehäuserückwand angeordnet sind und wobei die Verbindungsleiter (2) jeweils ein Draht oder ein Kabel sind und die Kontaktierungselemente jeweils ein Endabschnitt (39) eines Verbindungsleiters (2) sind, wobei der Endabschnitt (39) von der Rückseite (33) der Montageplatte (1) durch die zugeordnete Kontaktierungsausnehmung (4) geführt ist und von der Vorderseite (3) der Montageplatte (1) absteht, **dadurch gekennzeichnet, dass** mehrere nebeneinander angeordnete Endabschnitte (39) mehrerer Verbindungsleiter (2) mit einer formstabilen Verbindungseinrichtung (44) miteinander verbunden sind und durch eine Verlagerung der Verbindungseinrichtung (44) gemeinsam verlagert werden können.

2. Stromverteiler gemäß Anspruch 1, **dadurch gekennzeichnet, dass** die Verbindungsleiter (2) auf der Rückseite (33) der Montageplatte (1) aufgebracht sind.

3. Stromverteiler gemäß einem der voranstehenden Ansprüche, **dadurch gekennzeichnet, dass** die Kontaktierungselemente mindestens drei Kontaktierungsabschnitten zugeordnet sind, wobei jeder Kontaktierungsabschnitt zur Kontaktierung mit Funktionsbauelementen vorgegebener Bauelementeklassen vorgesehen ist und wobei die Kontaktierungselemente der Kontaktierungsabschnitte entsprechend der zugeordneten Bauelementeklassen mit Kontaktierungselementen anderer Kontaktierungsabschnitte elektrisch leitend verbunden sind.

4. Stromverteiler gemäß einem der vorangehenden Ansprüche, **dadurch gekennzeichnet, dass** mehrere Reihenklemmen (32) auf der Montageplatte (1) festgelegt sind, wobei jede Reihenklemme (32) von der Vorderseite (3) der Montageplatte (1) aus zugängliche Kontaktierungsanschlüsse aufweist und elektrisch leitend mit einem auf der Rückseite (33) der Montageplatte (1) angeordneten Verbindungsleiter (2) verbunden ist.

5. Stromverteiler gemäß Anspruch 4, **dadurch gekennzeichnet, dass** mindestens ein Klemmenkontaktierungsabschnitt drei Klemmenkontaktierungsreihen mit jeweils mindestens zwei Klemmenkontaktierungselementen aufweist, wobei jeweils ein SI-Kontaktierungselement einer zweiten SI-Kontaktierungsreihe über einen Verbindungsleiter (2) mit einem Klemmenkontaktierungselement einer ersten Klemmenkontaktierungsreihe elektrisch leitend verbunden ist.

6. Stromverteiler gemäß Anspruch 5, **dadurch gekennzeichnet, dass** Klemmenkontaktierungselemente einer zweiten Klemmenkontaktierungsreihe über mindestens einen Verbindungsleiter (2) elektrisch leitend mit einem FI-Neutralleiterkontaktierungselement der zweiten Kontaktierungsreihe (11) verbunden sind.

7. Stromverteiler gemäß Anspruch 5 oder Anspruch 6, **dadurch gekennzeichnet, dass** Klemmenkontaktierungselemente einer dritten Klemmenkontaktierungsreihe über mindestens einen Verbindungsleiter (2) elektrisch leitend mit einer auf der Vorderseite (3) der Montageplatte (1) angeordneten Schutzleiteranschlussklemme (PE) verbunden sind.

8. Stromverteiler gemäß einem der vorangehenden Ansprüche, **dadurch gekennzeichnet, dass** der Stromverteiler einen mit einem FI-Kontaktierungsabschnitt elektrisch leitend verbindbaren Fehlerstromautomaten (23) aufweist.

9. Stromverteiler gemäß einem der vorangehenden Ansprüche, **dadurch gekennzeichnet, dass** jeweils ein SI-Kontaktierungselement einer ersten SI-Kontaktierungsreihe und ein SI-Kontaktierungselement einer zweiten SI-Kontaktierungsreihe (16) ein SI-Kontaktierungselementepaar bildet und dass der Stromverteiler mindestens einen mit einem SI-Kontaktierungselementepaar verbindbaren Sicherungsautomaten (24) aufweist.

10. Stromverteiler gemäß einem der vorangehenden Ansprüche 5 bis 7, **dadurch gekennzeichnet, dass** jeweils ein Klemmenkontaktierungselement der ersten Klemmenkontaktierungsreihe und ein Klemmenkontaktierungselement der zweiten Klemmenkontaktierungsreihe und ein Klemmenkontaktierungselement der dritten Klemmenkontaktierungsreihe eine Klemmenkontaktierungselementeeinheit bildet und dass der Stromverteiler (31) mindestens eine mit einer Klemmenkontaktierungselementeeinheit verbindbare Reihenklemme (32) aufweist.

## Claims

1. Power distributor having a housing and a mounting plate (1), which is arranged within the housing, for mounting electrical functional components (6), wherein the mounting plate (1) comprises a front side (3) for arranging the electrical functional components (6) and a rear side (33) facing a housing rear wall and located opposite the front side (3), wherein the mounting plate (1) comprises, starting from the front side (3), a plurality of contacting recesses (4) extending in the direction of the rear side (33), wherein electrical contacting elements for making contact with electrical functional components are arranged in the region of the contacting recesses (4), wherein individual contacting elements are electrically conductively connected to one another by means of electrical connecting conductors (2), wherein the connecting conductors (2) are arranged between the rear side (33) of the mounting plate (1) and the housing rear wall and wherein the connecting conductors (2) are respectively a wire or a cable and the contacting elements are respectively an end section (39) of a connecting conductor (2), wherein the end section (39) is guided through the associated contacting recess (4) from the rear side (33) of the mounting plate (1) and protrudes from the front side (3) of the mounting plate (1), **characterised in that** a plurality of end sections (39) of a plurality of connecting conductors (2) which are arranged next to one another are connected to one another by a dimensionally stable connecting device (44) and can be displaced together by displacing the connecting device (44).

2. Power distributor according to claim 1, **characterised in that** the connecting conductor (2) is attached to the rear side (33) of the mounting plate (1).

3. Power distributor according to any one of the preceding claims, **characterised in that** the contacting elements are associated with at least three contacting sections, wherein each contacting section is provided with specific component classes for contacting functional components of predetermined component classes and wherein the contacting elements of the contacting sections are electrically conductively connected to contacting elements of other contacting sections in accordance with the assigned component classes.

4. Power distributor according to any one of the preceding claims, **characterised in that** a plurality of terminal blocks (32) are fixed on the mounting plate (1), wherein each terminal block (32) comprises contacting terminals accessible from the front side (3) of the mounting plate (1) and is electrically conductively connected to a connecting conductor (2) arranged on the rear side (33) of the mounting plate (1).

5. Power distributor according to claim 4, **characterised in that** at least one terminal contacting section comprises three terminal contacting rows, each having at least two terminal contacting elements, wherein in each case one SI contacting element of a second SI contacting row is electrically conductively connected to a terminal contacting element of a first terminal contacting row via a connecting conductor (2).

6. Power distributor according to claim 5, **characterised in that** terminal contacting elements of a second terminal contacting row are electrically conductively connected via at least one connecting conductor (2) to a finite conductor contacting element of the second contacting row (11).

7. Power distributor according to claim 5 or claim 6, **characterised in that** terminal contacting elements of a third terminal contacting row are connected to a protective conductor terminal (PE) arranged on the front side (3) of the mounting plate (1) via at least one connecting conductor (2).

8. Power distributor according to any one of the preceding claims, **characterised in that** the power distributor comprises a residual current circuit breaker (23) which can be electrically conductively connected to an FI contacting section.

9. Power distributor according to any one of the preceding claims, **characterised in that** in each case one SI contacting element of a first SI contacting row and one SI contacting element of a second SI contacting row (16) form an SI contacting element pair and **in that** the power distributor comprises at least one circuit breaker (24) that can be connected to a pair of SI contact elements.

10. Power distributor according to any one of the preceding claims 5 to 7, **characterised in that** in each case one terminal contacting element of the first terminal contacting row and one terminal contacting element of the second terminal contacting row and one terminal contacting element of the third terminal contacting row form a terminal contacting element unit, and **in that** the current distributor (31) comprises at least one terminal block (32) that can be connected to a terminal contacting element unit.

## Revendications

1. Tableau de distribution comportant un boîtier et, agencée à l'intérieur du boîtier, une plaque de montage (1) pour le montage de composants fonctionnels électriques (6), la plaque de montage (1) présentant une face avant (3) destinée à l'agencement des composants fonctionnels électriques (6) et une face arrière (33) opposée à la face avant (3) et tournée vers la paroi arrière du boîtier, la plaque de montage (1) présentant, à partir de la face avant (3), plusieurs évidements de mise en contact (4) s'étendant en direction de la face arrière (33), des éléments de mise en contact électriques étant agencés dans la zone des évidements de mise en contact (4) pour la mise en contact de composants fonctionnels électriques, des éléments de mise en contact individuels étant reliés électriquement-conducteur les uns aux autres par le biais de conducteurs de liaison électriques (2), les conducteurs de liaison (2) étant agencés entre la face arrière (33) de la plaque de montage (1) et la paroi arrière du boîtier et les conducteurs de liaison (2) étant respectivement un fil ou un câble et les éléments de mise en contact étant respectivement une partie d'extrémité (39) d'un conducteur de liaison (2), la partie d'extrémité (39) étant guidée depuis la face arrière (33) de la plaque de montage (1) à travers l'évidement de mise en contact (4) associé et dépassant de la face avant (3) de la plaque de montage (1), **caractérisé en ce que** plusieurs parties d'extrémité (39) agencées les unes à côté des autres de plusieurs conducteurs de liaison (2) sont reliées les unes aux autres par un système de liaison (44) indéformable et peuvent être déplacées ensemble par un déplacement du système de liaison (44).

2. Tableau de distribution selon la revendication 1, **caractérisé en ce que** les conducteurs de liaison (2) sont appliqués sur la face arrière (33) de la plaque de montage (1) .

3. Tableau de distribution selon l'une des revendications précédentes, **caractérisé en ce que** les éléments de mise en contact sont associés à au moins trois parties de mise en contact, chaque partie de mise en contact étant prévue pour la mise en contact avec des composants fonctionnels de classes de composants prédéfinies et les éléments de mise en contact des parties de mise en contact étant reliés électriquement-conducteur à des éléments de mise en contact d'autres parties de mise en contact en fonction des classes de composants associées.

4. Tableau de distribution selon l'une des revendications précédentes, **caractérisé en ce que** plusieurs blocs de jonction (32) sont fixés sur la plaque de montage (1), chaque bloc de jonction (32) présentant des bornes de mise en contact accessibles depuis la face avant (3) de la plaque de montage (1) et étant relié électriquement-conducteur à un conducteur de liaison (2) agencé sur la face arrière (33) de la plaque de montage (1).

5. Tableau de distribution selon la revendication 4, **caractérisé en ce qu'**au moins une partie de mise en contact de borne présente trois rangées de mise en contact de borne avec respectivement au moins deux éléments de mise en contact de borne, un élément de mise en contact de coupe-circuit d'une deuxième rangée de mise en contact de coupe-circuit étant respectivement relié électriquement-conducteur à un élément de mise en contact de borne d'une première rangée de mise en contact de borne via un conducteur de liaison (2).

6. Tableau de distribution selon la revendication 5, **caractérisé en ce que** des éléments de mise en contact de borne d'une deuxième rangée de mise en contact de borne sont reliés électriquement-conducteurs à un élément de mise en contact de conducteur neutre à courant différentiel de la deuxième rangée de mise en contact (11) par le biais d'au moins un conducteur de liaison (2).

7. Tableau de distribution selon la revendication 5 ou la revendication 6, **caractérisé en ce que** des éléments de mise en contact de borne d'une troisième rangée de mise en contact de borne sont reliés électriquement-conducteurs à une borne de raccordement de conducteur de protection (PE) agencée sur la face avant (3) de la plaque de montage (1) par le biais d'au moins un conducteur de liaison (2).

8. Tableau de distribution selon l'une des revendications précédentes, **caractérisé en ce que** le tableau de distribution présente un dispositif de coupure différentiel automatique (23) pouvant être relié électriquement-conducteur à une partie de mise en contact à courant différentiel.

9. Tableau de distribution selon l'une des revendications précédentes, **caractérisé en ce que** respectivement un élément de mise en contact de coupe-circuit d'une première rangée de mise en contact de coupe-circuit et un élément de mise en contact de coupe-circuit d'une deuxième rangée de mise en contact de coupe-circuit (16) forment une paire d'éléments de mise en contact de coupe-circuit et **en ce que** le tableau de distribution présente au moins un coupe-circuit automatique (24) pouvant être relié à une paire d'éléments de mise en contact de coupe-circuit.

10. Tableau de distribution selon l'une des revendications précédentes 5 à 7, **caractérisé en ce que** respectivement un élément de mise en contact de borne de la première rangée de mise en contact de borne, un élément de mise en contact de borne de la deuxième rangée de mise en contact de borne et un élément de mise en contact de borne de la troisième rangée de mise en contact de borne forment une unité d'éléments de mise en contact de borne et **en ce que** le tableau de distribution (31) présente au moins un bloc de jonction (32) pouvant être relié à une unité d'éléments de mise en contact de borne.
